Europäisches Patentamt

(19) European Patent Office

Office européen des brevets

(11) Publication number : **0 309 066 B1**

(12) **EUROPEAN PATENT SPECIFICATION**

(45) Date of publication of patent specification :
**05.06.91 Bulletin 91/23**

(51) Int. Cl.⁵ : **B60J 7/12, F15B 15/26,
B62D 33/06**

(21) Application number : **88202076.1**

(22) Date of filing : **23.09.88**

(54) **Piston-cylinder device to be powered by a pressure fluid.**

(30) Priority : **23.09.87 NL 8702269**

(43) Date of publication of application :
**29.03.89 Bulletin 89/13**

(45) Publication of the grant of the patent :
**05.06.91 Bulletin 91/23**

(84) Designated Contracting States :
**DE FR GB IT NL SE**

(56) References cited :
**DE-A- 2 531 394
FR-A- 2 372 068
US-A- 2 128 849
US-A- 3 974 910
US-A- 4 085 960**

(73) Proprietor : **Applied Power Inc.
250 Executive Drive
Brookfield Wisconsin 53005 (US)**

(72) Inventor : **Kolhoff, Hendrik
Bizetstraat 20
NL-7482 AN Haaksbergen (NL)**
Inventor : **Sonneborn, Lambertus Johannes
Waterhamskamp 15
NL-7576 EM Oldenzaal (NL)**

(74) Representative : **Boelsma, Gerben Harm, Ir. et
al
Octrooibureau Polak & Charlouis Laan Copes
van Cattenburch 80
NL-2585 GD Den Haag (NL)**

EP 0 309 066 B1

## Description

The invention relates to a hydraulic piston-cylinder device for displacing two mutually movable parts from a closed position into an open position and vice versa, said device cooperating in at least one of its piston end positions with a locking means, comprising a pin-like element adapted to engage a corresponding hole in a counter element and being releasable through the hydraulic fluid pressure.

Piston cylinder devices, among other uses, have been provided as the tilting device in vehicles having a forwardly tiltable cabin. A device of this kind is disclosed in US-A-4,085,960. The locking means cooperating with the piston cylinder device is therein formed by a separate device whereby the cab is locked relative to the chassis of the vehicle in the driving position of the latter. The locking pin is formed by the free end of the piston rod of a piston which is slidably mounted in a cylinder fixed to the chassis of the vehicle. A compression spring acting on the free piston surface tends to move the piston and the locking pin into the extended position, while hydraulic fluid may be supplied to the piston rod side of the piston to move the latter against compression spring action in the retracted position. The counter element comprising the hole for the locking pin is making part of the cabin. When lowering the cabin from its tilted position into its driving position, said counter element is moving – in the final stage of the lowering procedure – transverse to the axis of the locking pin end.

To allow said counter element to get with its hole aligned relative to the locking pin the latter will have to be in its retracted position first. The question whether the locking pin will actually take its retracted position depends on the value of the fluid pressure in the tilting system during lowering. This value may, however, not be too high in this stage, where in fact no fluid pressure is required to overcome the cabin weight. The characteristics of the compression are therefore rather critical.

The invention aims at essentially simplifying and improving a piston cylinder device having a locking function for applications as has been described above and also for different applications, without making concessions to the reliability of the locked condition.

The piston cylinder device as proposed by the invention is characterized in that the pin-like element is extending at the relative cylinder end in axial direction from the piston end surface or from the cylinder bottom respectively, said pin being designed to jammingly engage with said corresponding hole in the opposite cylinder bottom or the opposite piston end surface respectively.

In the piston cylinder device according to the invention thereby the locking means is integrated in the device, the locking pin and the locking hole being mutually aligned at all times. Thereby, in relation to the known structure, the conduits connecting the locking means with the piston cylinder device and with the pressure fluid source are eliminated while the pressure fluid circuit has become essentially simpler and less failure sensitive.

At the end of the operative piston stroke in the direction of the end position to be locked the locking pin is clampingly engaged with the locking bore under the influence of the pressure imparted to the piston. Said clamping engagement continues after the release of the pressure and may only be removed by pressurizing the piston in the opposite direction.

A particular application of the device according to the invention is that for opening and closing the (folding) roof of a vehicle of the convertible type. For such an application the known structure having a separate locking device would entail problems relative to the accommodation of the many conduits and the separate locking device.

In a practical embodiment in which the pin is secured to the piston, the bore is connected with the pressure fluid supply and the pin is provided with an axial channel which opens in the piston head part surrounding the pin, through a transverse channel provided at the pin base.

Thereby the pressure supplied for moving the piston from its locked position will become directly operative on the total piston surface and a slight overpressure relative to the normally necessary pressure will be sufficient to remove the clamping force between the pin and the bore and therewith cancel the locking condition.

In a preferred embodiment which, moreover, combines with an accurately defined piston end position, the pin and the corresponding bore are somewhat conically shaped.

The invention is hereunder further explained with reference to the drawing of an embodiment given as an example.

Fig. 1 shows the application of the device according to the invention as a device for opening and closing a folding roof of a vehicle ; and

Fig. 2A and 2B show an end portion of the piston cylinder device according to the invention, namely with the piston on its way towards (fig. 2A) its end position and in (fig. 2B) its retracted end position respectively.

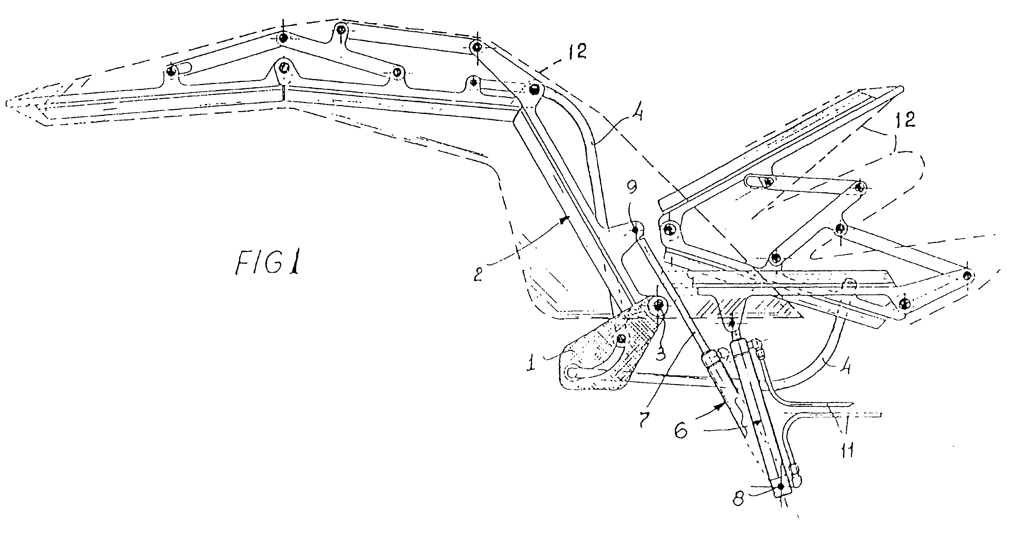

The folding roof as shown in fig. 1 is constructed in a manner known per se. At both sides of the car body (not shown) of the vehicle there is a fixed mounting plate 1 to which the folding roof frame 2 is articulated at 3 and which serves simultaneously as guiding element for a folding guide rod 4.

At both sides of the car body a hydraulic piston device 6 according to the invention is mounted with its end remote from the piston rod 7 articulated in a fixed point 8. The free piston rod end is at 9 hinged to the folding roof frame 2. The pressure and return conduits connected with the stationary pump and pressure fluid source (not shown) towards and from the cylinder 10 are indicated 11.

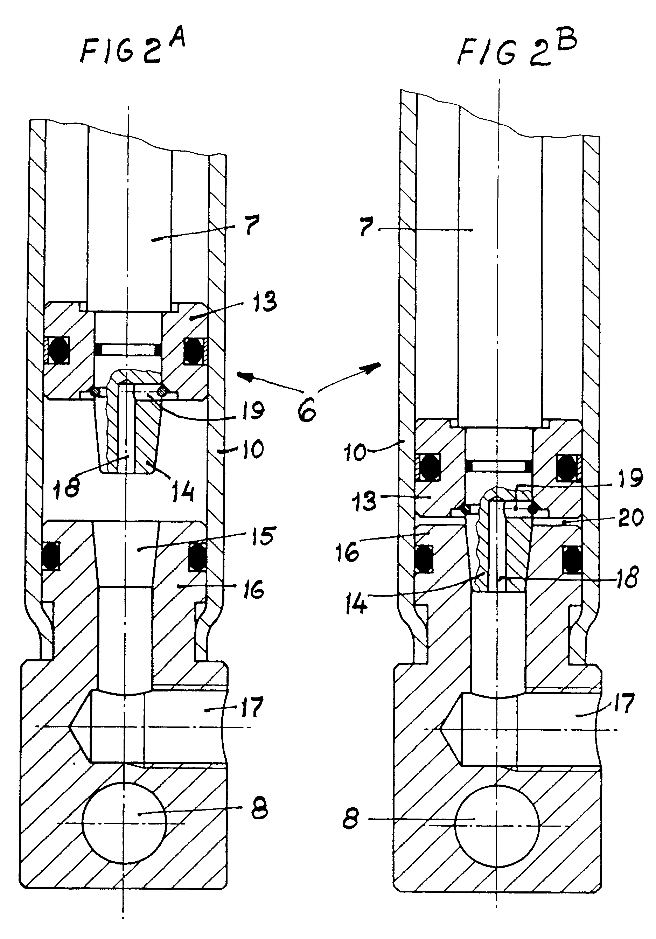

The drawing shows the folding roof in two positions, namely the closed position I in which the roof covering 12 encloses the frame 2 in tight condition and the open position II in which the roof covering 12 has been folded in pleats between the collapsed members of the frame 2. In the closed position I the piston rod 7 is in its (fully) extended position whereas the open position II of the roof corresponds with the retracted condition of the piston cylinder device 6. The roof is locked in the open position by a locking device integrated in the device 6, which locking device is hereunder further described with reference to fig. 2A, B.

The piston 13 is at its head surface provided with a central, slightly conical pin 14 cooperating with a central, slightly conical bore 15 in the cylinder bottom 16. 17 denotes the connection for one of the pressure-/return conduits 11.

Fig. 2A shows the device 6 in a position in which the piston 13 approaches its retracted end position, in which therefore the roof has practically reached its open condition.

In Fig. 2B the piston 13 has been halted in an end position in which the pin 14 has become jammed in the bore 15 under the influence of the pressure prevailing at the piston rod side. The clamping action between the pin 14 and the bore 15 and therewith the locking of the roof in the open condition continues until a pressure is generated through the connection 17 in the space below the piston 13. The pin is provided with an axial channel 18 opening at the annular piston head surface around the pin through a transverse channel 19. Through said channels thereby the hydraulic liquid may reach the space 20 around the annular piston head surface and the cylinder bottom. When closing the roof from the locked open position the pressure of the hydraulic liquid supplied at the bottom side of the cylinder will therefore immediately be operative on the total piston head surface which guarantees an effective release.

It will be clear that the clamping action to be surmounted when opening the roof will not always be the same for both piston cylinder devices. However, when using hydraulic connection designs which are known in the field of hydraulic cab tilting devices, nevertheless a synchronous movement of both hydraulic cylinders can be attained.

## Claims

1. Hydraulic piston-cylinder device (6) for displacing two mutually movable parts from a closed position into an open position and vice versa, said device cooperating in at least one of its piston end positions with a locking means, comprising a pin-like element (14) adapted to engage a corresponding hole (15) in a counter element (16) and being releasable through the hydraulic fluid pressure, characterized in that the pin-like element (14) is extending at the relative cylinder end in axial direction from the piston end surface (13) or from the cylinder bottom (16) respectively, said pin (14) being designed to jammingly engage with said corresponding hole (15) in the opposite cylinder bottom (16) or the opposite piston end surface (13) respectively.

2. Device according to claim 1, characterized in that the pin is provided on the piston (13) and in that the bore (15) provided in the cylinder bottom (16) is connected with the pressure fluid supply, the pin (14) being provided with an axial channel (18) opening in the piston head part surrounding the pin (14) through a transverse channel (19) provided at pin base.

3. Device according to claims 1, 2 characterized in that the pin (14) and the corresponding bore (16) are formed slightly conical.

4. Vehicle having a folding roof, characterized in that for opening and closing the folding roof (2, 12) one or more devices according to claims 1 to 3 are applied, such that a locked piston end position corresponds with the open position of the roof (2, 12).

## Ansprüche

1. Hydraulische Kolben-Zylindervorrichtung (6), zum Verstellen von zwei mit Bezug aufeinander beweglichen Teilen zwischen einer Schließlage und einer geöffneten Lage und umgekehrt, welche Vorrichtung in wenigstens einer ihrer Endlagen mit Verriegelmitteln zusammenarbeitet, welche ein stiftartiges Element (14) enthalten, das zum eingreifen in eine entsprechende Bohrung (15) in einem Gegenelement (16) geeignet ist und durch hydraulischen Flüssigkeitsdruck entriegelbar ist, dadurch gekennzeichnet daß das stiftartige Element (14) sich am betreffenden Zylinderende von der Kolben-Stirnfläche (13) bzw. vom Zylinderboden (16) in axialer Richtung erstreckt, wobei der Stift (14) zum klemmenden Eingriff in die entsprechende Bohrung (15) im gegenüberliegenden Zylinderboden (16) bzw. in der gegenüberliegenden Kolben-Stirnfläche (13) bemessen ist.

2. Vorrichtung nach anspruch 1, dadurch gekennzeichnet, daß der Stift am Kolben (13) vorgesehen ist und daß die im Zylinderboden (16) vorgesehene Bohrung mit dem Druckflüssigkeitszufuhr verbunden ist, wobei der Stift (14) einen axialen Kanal (18) aufweist, der mittels eines an seinem Fuß vorgesehenen Querkanals (19) im den Stift (14) umgebenden Kolbenkopfteil ausmündet.

3. Vorrichtung nach Ansprüchen 1, 2 dadurch gekennzeichnet, daß der Stift (14) und die entsprechenden Bohrung (16) ein wenig konisch gestaltet sind.

4. Fahrzeug mit einem Faltdach, dadurch gekennzeichnet, das zum Öffnen und Schließen des Faltdaches (2, 12) eine oder mehrere Vorrichtungen nach Ansprüchen 1 biß 3 vorgesehen sind, in der Weise, daß eine verriegelte Kolben-Endlage der geöffneten Lage des Daches (2, 12) entspricht.

**Revendications**

1. Dispositif hydraulique piston-cylindre (6) pour déplacer deux pièces mutuellement mobiles depuis une position fermée vers une position ouverte et vice versa, ledit dispositif coopérant dans au moins l'une de ses positions finales du piston avec un moyen de verrouillage, comprenant un élément formant plot (14), apte à s'engager dans un perçage correspondant (15) d'un élément de compteur (16) et étant relâchable à l'aide d'une pression de fluide hydraulique, caractérisé en ce que l'élément formant plot (14) s'étend à l'extrémité du cylindre relativement dans la direction axiale depuis la surface d'extrémité du piston (13) ou depuis la base du cylindre (16) respectivement, ledit plot (14) étant réalisé pour s'accrocher par engagement dans ledit trou correspondant (15) sur la base de cylindre opposée (16) ou sur la surface opposée d'extrémité de piston (13), respectivement.

2. Dispositif selon la revendication 1, caractérisé en ce que le plot est prévu sur le piston (13) et en ce que le perçage (15) prévu sur la base du cylindre (16) est connecté à l'alimentation en fluide sous pression, le plot (14) étant pourvu d'un canal axial (18) débouchant dans la partie de tête du piston qui entoure le plot (14) au travers d'un canal transversal (19) prévu à la base du plot.

3. Dispositif selon la revendication 1, 2, caractérisé en ce que le plot (14) et le perçage correspondant (16) sont de forme légèrement conique.

4. Véhicule ayant une capote dépliable, caractérisé en ce que pour ouvrir et pour fermer la capote dépliable (2, 12) au moins un dispositif en accord avec les revendications 1 à 3 est utilisé, de sorte que la position finale de verrouillage du piston correspond à la position ouverte de la capote (2, 12).

FIG 1

12

4

9

2

1

3

7

6

8

4

11

12

EP 0 309 066 B1

FIG 2$^A$

FIG 2$^B$